# EUROPÄISCHE PATENTSCHRIFT

(11) **EP 2 874 157 B1**
(45) Veröffentlichungstag und Bekanntmachung des Hinweises auf die Patenterteilung: **17.02.2021**
(21) Anmeldenummer: 14003634.4
(22) Anmeldetag: 27.10.2014
(51) Int. Cl.: H01B 7/282, H01B 7/288

(54) **Elektrokabel**
Electric cable
Câble électrique

(30) Priorität: 01.11.2013 CH 18522013
(43) Veröffentlichungstag der Anmeldung: 20.05.2015
(73) Patentinhaber: Leoni Studer AG, 4658 Däniken (CH)
(72) Erfinder: Lenzin, André, CH-4616 Kappel (CH); Von Laue, Lukas, CH-5018 Erlinsbach (CH)
(74) Vertreter: Luchs, Willi

(56) Entgegenhaltungen:
- EP-B1- 1 878 026
- DE-A1- 3 115 990
- US-B1- 7 411 132

## Beschreibung

Die Erfindung betrifft ein Elektrokabel mit einem Aussenmantel aus Isoliermaterial und einer innerhalb diesem liegenden Barriere gegen Wasserpenetration aus einem bandförmigen wasserquellbaren Material.

Insbesondere bei einer mechanischen Beschädigung des Aussenmantels des Kabels kann Wasser oder Feuchtigkeit in das Innere desselben eindringen und dieses mit der Zeit beschädigen bzw. seine Isolationseigenschaften beeinträchtigen. Mit diesem wasserquellbarem Material im Kabel wird bei einer äusseren Kabelbeschädigung und dem damit möglichen Eindringen von Wasser eine Barriere gebildet, mittels der das Wasser vor einem weiteren Einfliessen in Längsrichtung des Kabels gestoppt wird. Mögliche durch Wasser hervorgerufene Beschädigungen bleiben somit lokal begrenzt, d.h. sie breiten sich nicht über die ganze Länge des Kabels aus.

Bei der Druckschrift US-A-7,411,132 ist ein wasserblockierendes Elektrokabel geoffenbart, das aus mehreren leitenden Adern, diese umgebenden wasserquellenden Bändern bzw. wasserquellenden Längselementen sowie aus einem Mantel besteht. Damit ist aber ein aufwendiger und teurer Aufbau dieses Kabels gegeben.

Bei den Elektrokabeln dieser Art ist das wasserquellbare Band so um die metallische Abschirmung aufgebracht, dass das Kabel über die ganze Kabellänge vollkommen abgedeckt ist. Insbesondere bei besonders grossen Elektrokabeln müssen infolgedessen verhältnismässig grosse Bandmengen aus wasserquellbarem Material aufgebracht werden.

Dadurch ergeben sich Nachteile zum einen, dass derartige Bänder kostspielig sind und fallen anteilsmässig mit bis zu 50% der gesamten Herstellungskosten ins Gewicht, und zum andern kann die wasserquellbare Schicht eine zusätzliche thermische Isolation bewirken, die unerwünscht ist, da sie die Wärmeabführung beeinträchtigt und dadurch zur Begrenzung der übertragbaren Strommenge oder der Kurzschluss-Strommenge in Leitern oder Schirmen beitragen kann.

Bei einem Elektrokabel gemäss der Druckschrift DE-A-31 15 990 ist eine Kabelseele, ein Mantel und zwischen diesen eine quellfähige Substanz in Form eines Quellvlieses angeordnet. Das Quellvlies ist vorteilhaft durch Streifen oder Kreuzwendeln aufgebracht und es werden dabei voneinander getrennte Kammern gebildet, die dann eine flüssigkeitsdichte Trennung voneinander bewirken. Bei einem Riss des Mantels wird aber nicht verhindert, dass das Wasser unmittelbar mit den Leitersträngen in Berührung gelangt und damit die Isolation nicht mehr gewährleistet ist.

Der Erfindung liegt die Aufgabe zugrunde, diesen Nachteil zu vermeiden und ein Elektrokabel der eingangs genannten Art zu schaffen, das mit einer kostengünstigen, leicht herstellbaren und effizienten Barriere gegen Wasserpenetration versehen ist.

Diese Aufgabe ist erfindungsgemäss dadurch gelöst, dass die Barriere aus mindestens zwei Längselementen des genannten wasserquellbarem Material besteht, die dergestalt im Kabel geführt sind, dass sie in diesem entlang des Kabels abgeschlossene Teilbereiche begrenzen.

Beim erfindungsgemässen Elektrokabel wird in Kauf genommen, dass Wasser punktuell bzw. flächig in einen der nicht abgedeckten Teilbereiche eindringen kann, weil die metallische Abschirmung unterhalb des Kabelmantels dort normalerweise die wirksame Funktion einer Barriere übernimmt. Dadurch ist die Gefahr eine Beschädigung des Kabels bereits begrenzt. Gleichzeitig wird aber die für den Bau der spezifischen Wasserbarriere unterhalb des Kabelmantels benötigte Menge an wasserquellbarem Bandmaterial erheblich reduziert und damit die gesamthaften Herstellungskosten des Kabels herabgesetzt, nebst einer besseren Wärmeabführung beim Kabel.

Die Erfindung sieht vor, dass die als Längselemente vorgesehenen Bänder aus wasserquellbarem Material vorzugsweise wendelförmig um eine metallische Abschirmung sich in bestimmten Abständen entlang des Kabels überdeckend gewickelt sind. Daraus resultiert eine herstellungsmässig besonders einfache und kostengünstige Ausführung der Barriere, insbesondere wenn diese aus nur zwei sich in regelmässigen Abständen kreuzenden Bändern aus wasserquellbarem Material hergestellt ist.

Zweckmässigerweise sind die Überdeckungsstellen der Bänder voneinander um das Mehrfache von deren Bandbreite beabstandet. Dadurch sind die von den Bändern nicht abgedeckten Teilbereiche des Kabels so bemessen, dass sie eine signifikante Reduzierung der benötigten Bandmenge ermöglichen, ohne dass dies nennenswert die Sicherheitsfunktion der Barriere beeinträchtigt.

Zur weiteren Vereinfachung der Herstellung sieht die Erfindung auch vor, dass die Bänder aus wasserquellbarem Material auf der Metallabschirmung lose aufliegen, d.h. nicht auf die Abschirmung aufgeklebt sind. Um die radiale Baustärke der Barriere kleinzuhalten, ist es vorteilhaft, wenn die Bänder eine Bandstärke von nur einigen Zehntelmillimetern aufweisen.

Zweckmässigerweise sind die Bänder aus Textilmaterial mit darin enthaltenem wasserquellendem Pulver hergestellt. Alternativ dazu können sie aus netzartig aufgebrachten wasserquellendes Pulver enthaltenen Fäden, die auf der metallischen Abschirmung positioniert sind, hergestellt sein.

Die Erfindung betrifft auch ein Verfahren zum Herstellen des erfindungsgemässen Elektrokabels, das die gleichzeitige Durchführung verschiedener Arbeitsprozesse in einem Arbeitsgang sehr einfach sicherstellt. Hierbei werden die Bänder oder Fäden aus wasserquellbarem Material während der Herstellung des Kabels von Spulen abgewickelt, die um das Kabel zirkular mit einer dem Vorschub des Kabels angepassten Drehgeschwindigkeit geführt sind.

Es ist auch verfahrenstechnisch vorteilhaft, wenn erfindungsgemäss zunächst die metallische Abschirmung mit einem sich längs des Kabels überlappenden und an der Überlappungsstelle verklebten Metallband hergestellt wird und anschliessend die wasserquellbaren Bänder auf das Metallband aufgebrächt werden. Im gleichen Arbeitsgang wird sodann darüber der Aussenmantel aus Kunststoff extrudiert. Da der Kunststoff beim Extrudieren sich erwärmt und dadurch plastisch massig wirkt, dringt er durch das Material der Bänder und bewirkt damit zumindest eine formschlüssige Haftung bzw. ein teilweises Ankleben derselben auf der Innenseite des Kunststoffs.

Die Erfindung sowie weitere Vorteile derselben sind nachfolgend anhand eines Ausführungsbeispiels unter Bezugnahme auf die Zeichnung näher erläutert. Es zeigen:
- Fig. 1: ein erfindungsgemässes Elektrokabel mit einer Barriere gegen Wasserpenetration aus wasserquellbarem Bandmaterial, schematisch dargestellt,
- Fig. 2: eine teilweise Ansicht der Barriere um das Kabel herum nach Fig. 1,
- Fig. 3: eine teilweise Ansicht einer Variante einer Barriere um das Kabel herum nach Fig. 1,
- Fig. 4: eine weitere Ansicht einer Variante einer Barriere um das Kabel herum nach Fig. 1, und
- Fig. 5: ein erfindungsgemässes Elektrokabel mit einer Barriere, abgestuft dargestellt.

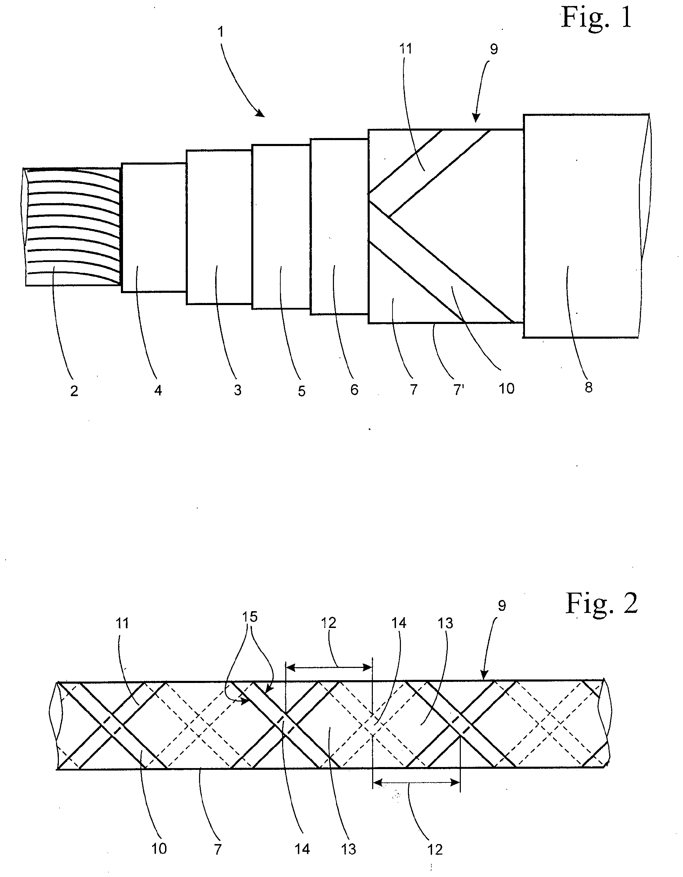

Das in Fig. 1 dargestellte Elektrokabel 1 besteht aus einem Innenleiter 2 mit mehreren miteinander verseilten Drähten aus Aluminium oder Kupfer, einer Isolationsschicht 3, die mit Halbleiterschichten 4 und 5 umgeben ist, einer weiteren Lage 6 eines halbleitenden Bandes und einer metallischen Abschirmung 7 bestehend aus einem sich längs des Kabels erstreckenden Metallband, das an seiner Überlappungsstelle verklebt oder verschweisst ist und mit einem äusseren Isoliermantel 8 aus polymerem Kunststoffmaterial abgedeckt ist.

Elektrokabel dieser Art werden zum Leiten von elektrischem Strom bei mittleren oder höheren Spannungen, beispielsweise bei Betriebsspannungen von bis zu 420 kV angewendet.

Zwischen der metallischen Abschirmung 7 und dem äusseren Isoliermantel 8 befindet sich eine Barriere 9 gegen Wasserpenetration aus bandförmigem, wasserquellbarem Material, die verhindern soll, dass das Kabel durch Eindringen von Wasser Schaden nimmt.

Gemäss Fig. 2 besteht die Barriere 9 erfindungsgemäss aus zwei um die metallische Abschirmung 7 wendelförmig gewickelten, wasserquellbaren Bändern 10, 11, die sich entlang des Kabels 1 in regelmässigen Abständen 12 überdecken und somit entlang des Kabels abgeschlossene Teilbereiche 13 eingrenzen, die von den Bändern 10, 11 nicht abgedeckt sind.

Beim beschriebenen Ausführungsbeispiel betragen die Abstände 12 zwischen den Überdeckungsstellen 14 etwa das 5- bis 100-fache der Bandbreite 15 der wasserquellbaren Bänder 10, 11. Die Abstände 12 können je nach Dimensionierung und/oder den Einsatzbedingungen des Kabels variieren. Entscheidend ist es, dass die von den Bändern 10, 11 nicht abgedeckten Teilflächen der metallischen Abschirmung 7 so bemessen sind, dass die Gefahr der Wasserpenetration auf verhältnismässig kleine Teilbereiche des Kabels begrenzt ist, während die im Verhältnis zum Stand der Technik reduzierte Bandmenge sich in niedrigeren Herstellungskosten und einer besseren Wärmeabführung des Kabels niederschlägt.

In diesem Sinne ist die beschriebene Ausführung der Barriere mit nur zwei wasserquellbaren Bändern sehr vorteilhaft. Die erfindungsgemässe Barriere kann aber auch selbstverständlich mit mehr als zwei wasserquellbaren Bändern, gegebenenfalls mit einer schmäleren Bandbreite oder quellbaren Textilfäden, ausgeführt werden.

Um die Gesamtdicke des Elektrokabels nicht übermässig zu vergrössern, werden vorzugsweise wasserquellbare Bänder mit einer Banddicke von einigen Zehntelmillimetern eingesetzt. Diese sind in der Regel aus Textilmaterial mit darin enthaltenem wasserquellendem Pulver hergestellt. Sie können aber auch aus netzartig verarbeiteten Fäden, die auf die metallische Abschirmung des Kabels aufgetragen oder aufgewickelt sind, hergestellt sein.

Die Kunststoffisolation des Kabels, bestehend aus der Halbleiterschichten 4 und 5 und dem äusseren Isoliermantel 8, wird mittels Extrudiermaschinen hergestellt, die es ermöglichen, entweder nur eine Schicht oder gleichzeitig in einem Arbeitsgang mehrere Schichten aufzutragen. Während der Herstellung des Kabels werden die Bänder 10, 11 aus wasserquellbarem Material erfindungsgemäss von Spulen abgewickelt, die um das Kabel mit einer dem Vorschub des Kabels angepassten Drehgeschwindigkeit geführt sind.

Zweckmässigerweise wird in einem Arbeitsgang zunächst die metallische Abschirmung 7 mit einem sich längs des Kabels überlappenden und an der Überlappungsstelle verklebten oder verschweissten Metallband bzw. Folien aus Aluminium oder Kupfer oder anderen, leitenden metallischen Legierungen hergestellt. Danach können im gleichen fertigungstechnischen Arbeitsgang die wasserquellbaren Bänder 10, 11 auf das Metallband gewickelt werden. Anschliessend wird darüber der Aussenmantel 8 aus Kunststoff extrudiert.

Da sich der Kunststoff beim Extrudieren erwärmt und dadurch plastisch wirkt bzw. massig wird, dringt er durch das Material der Bänder 10, 11, und bewirkt damit eine formschlüssige Haftung der Bänder auf der Innenseite des Kunststoffs. Dadurch sind die Bänder 10 und 11 im Kabel bezüglich Ihrer relativen Lage zueinander und hinsichtlich des Belegungsgrades zu dem darunter liegenden metallischen Schirm sicher fixiert.

Die erfindungsgemässe Barriere 9 bestehend aus den zwei Bändern 10, 11 zeichnet sich dadurch aus, dass sie erstens verhältnismässig niedrige Herstellungskosten verursacht und dennoch zuverlässig verhindert, dass das Elektrokabel durch Eindringen von Wasser oder Wasserdampf Schaden nimmt, und dass sie zweitens in Bezug auf die strombedingte Wärmeableitung einen geringeren thermischen Widerstand entgegensetzt.

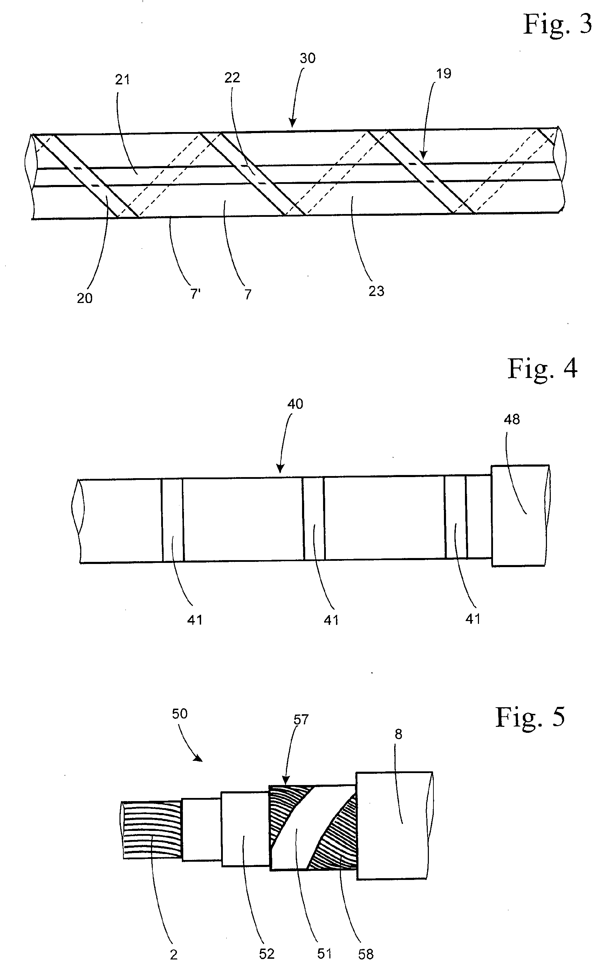

Fig. 3 zeigt eine Variante eines Kabels 30 der Erfindung, welches an sich gleich wie dasjenige gemäss Fig. 1 hergestellt ist. Bei der Barriere 19 ist aber nur eines von zwei Bändern 20, 21 gewickelt, während das andere Band 21 nicht wendelförmig, sondern längslaufend entlang der Kabelachse geführt ist. Damit sind wiederum abgeschlossene Teilbereiche 23 gebildet. Die Bänder 20, 21 kreuzen sich an Überdeckungen 22 in bestimmten Abständen entlang des Kabels 30. Im Prinzip könnten auch zwei solcher Bänder 21 vorder- und rückseitig je längslaufend vorgesehen sein.

Fig. 4 zeigt eine weitere Variante eines Elektrokabels 40 mit einem angedeuteten äusseren Isolationsmantel 48, bei dem innenseitig wasserquellbare Bänder 41 ringförmig in Abständen zueinander um das Kabel herum geführt sind, so dass wiederum Teilbereiche ohne Bänder gebildet bzw. begrenzt werden.

Gemäss Fig. 5 ist ein Elektrokabel 50 als weitere Variante dargetan, bei welchem eine metallische Abschirmung 57 aus einer einlagigen Umwicklung von Drahtlitzen 58 gebildet ist, welche partiell wasserdurchlässig ist. Im Rahmen der Erfindung ist eine Barriere durch ein diese Abschirmung 57 aussenseitig wendelförmig umgebendes Band 51 sowie ein innenseitig vollflächiges Band 52 aus wasserquellbarem Material gebildet. Damit ist gewährleistet, dass eine Flüssigkeitsdurchlässigkeit über die gesamte Länge des Kabels verhindert werden kann.

Die Erfindung ist mit dem erläuterten Ausführungsbeispiel ausreichend dargetan. Selbstverständlich könnte sie noch durch andere Ausführungsbeispiele erläutert sein. Vorteilhaft ist eine metallischen Abschirmung innenseitig der Barriere vorgesehen. Es könnte aber auch nur ein Isolationsmaterial aus Kunststoff vorgesehen sein.

Anstelle von Bändern könnten auch Fäden als Längselemente vorteilhaft in der Anordnung mehrere nebeneinander verwendet werden.

## Patentansprüche

1. Elektrokabel, mit einem Aussenmantel (8, 48) aus Isoliermaterial und einer innerhalb diesem liegenden Barriere (9, 19) gegen Wasserpenetration aus einem bandförmigen wasserquellbaren Material, wobeidie Barriere (9, 19) aus mindestens zwei Längselementen, wie Bändern (10, 11, 20, 41, 51) oder Fäden, aus wasserquellbarem Material besteht, die derart im Kabel (1, 30) geführt sind, dass sie in diesem entlang des Kabels abgeschlossene Teilbereiche (13, 23) begrenzen, **dadurch gekennzeichnet, dass**
die aus den mindestens zwei Längselementen bestehende Barriere (9, 19) um eine metallische Abschirmung (7, 57) geführt ist, wobei letztere aus einem Metallband bzw. einer Folie aus Aluminium oder Kupfer oder anderen, leitenden metallischen Legierungen oder aus einer Umwicklung von Drahtlitzen (58) mit einem innenseitig vollflächigen Band (52) aus wasserquellbarem Material besteht.

2. Elektrokabel nach Anspruch 1, **dadurch gekennzeichnet, dass** sich die Bänder (10, 11, 20, 51) aus wasserquellbarem Material wendelförmig um eine innenliegende Fläche (7') in bestimmten Abständen (12) entlang des Kabels überdeckend gewickelt sind.

3. Elektrokabel nach Anspruch 1, **dadurch gekennzeichnet, dass** mindestens ein Band (20) aus wasserquellbarem Material wendelförmig um die innenliegende Fläche (7') gewickelt ist, während mindestens ein anderes Band (21) parallel zur Kabelachse gelegt ist, derart, dass sich die Bänder in bestimmten Abständen entlang des Kabels (30) überdecken.

4. Elektrokabel nach Anspruch 2 oder 3, **dadurch gekennzeichnet, dass**
die Überdeckungsstellen (14, 22) der Bänder (10, 11, 20, 21) voneinander um das Mehrfache von deren Bandbreite (15) beabstandet sind.

5. Elektrokabel nach einem der vorhergehenden Ansprüche 1 bis 4, **dadurch gekennzeichnet, dass**
die Bänder (10, 11) auf der innenliegenden Fläche (7') lose aufliegen.

6. Elektrokabel nach einem der vorhergehenden Ansprüche 1 bis 5, **dadurch gekennzeichnet, dass**
die Bänder (10, 11, 20, 21, 41, 51) eine Bandstärke von nur einigen Zehntelmillimetern aufweisen.

7. Elektrokabel nach einem der vorhergehenden Ansprüche 1 bis 6, **dadurch gekennzeichnet, dass**
die Bänder (10, 11, 20, 21, 41, 51) aus Textilmaterial mit darin enthaltenem wasserquellendem Pulver hergestellt sind.

8. Elektrokabel nach einem der vorhergehenden Ansprüche 1 bis 6, **dadurch gekennzeichnet, dass**
die Bänder aus netzartig verarbeiteten Fäden bestehen, die auf die innenliegende Fläche (7') aufgetragen oder gewickelt sind.

9. Verfahren zum Herstellen eines Elektrokabels nach einem der vorhergehenden Ansprüche 1 bis 8, **dadurch gekennzeichnet, dass** in einem Arbeitsgang zunächst die Längselemente, wie Bänder (10, 11, 20, 41, 51) oder Fäden, aus wasserquellbarem Material auf die darunterliegende Fläche aufgebracht werden und anschließend darüber der Aussenmantel (8, 48) aus Kunststoffmaterial extrudiert wird.

10. Verfahren zum Herstellen eines Elektrokabels nach einem der vorhergehenden Ansprüche 1 bis 9, **dadurch gekennzeichnet, dass** die Längselemente, wie Bänder (10, 11, 20, 51) oder Fäden, aus wasserquellbarem Material während der Herstellung des Kabels von Spulen abgewickelt werden, von denen mindestens eine um das Kabel herum mit einer dem Vorschub des Kabels angepassten Drehgeschwindigkeit geführt sind.

11. Verfahren zum Herstellen eines Elektrokabels nach einem der vorhergehenden Ansprüche 1 bis 9, **dadurch gekennzeichnet, dass** in einem Arbeitsgang zunächst eine metallische Abschirmung (7) mit einem sich längs des Kabels überlappenden und an der Überlappungsstelle verklebten Metallband aufgebracht wird, danach die wasserquellbaren Bänder (10, 11, 20, 51) auf das Metallband aufgebracht werden und anschließend darüber der Außenmantel (8, 48) aus Kunststoffmaterial extrudiert wird.

## Claims

1. Electric cable, with an outer sheath (8, 48) of insulating material and a barrier (9, 19) inside this against water penetration of a band-shaped water-swellable material, whereby the barrier (9, 19) consists of at least two longitudinal elements, such as bands (10, 11, 20, 41, 51) or threads, made of water-swellable material, which are guided in the cable (1, 30) in such a way that they delimit partial areas (13, 23) that are closed off along the cable, **characterized in that**
the barrier (9, 19) consists of the at least two longitudinal elements are guided around a metallic shield (7, 57), whereby the latter consists of a metal band or a foil of aluminum or copper or other conductive metallic alloys or of a wounding of wire strands (58) with an inner side full-faced band (52) of water-swellable material.

2. Electric cable according to claim 1, **characterized in that** the bands (10, 11, 20, 51) of water-swellable material are wound in a helical manner around an inside surface (7') at certain intervals (12) along the cable.

3. Electric cable according to claim 1, **characterized in that** at least one band (20) of water-swellable material is helically wound around the inside surface (7'), while at least one other band (21) is laid parallel to the cable axis, such that the bands cover at certain intervals along the cable (30).

4. Electric cable according to claim 2 or 3, **characterized in that** the overlap points (14, 22) of the bands (10, 11, 20, 21) are spaced from one another by a multiple of their band width (15).

5. Electric cable according to one of the preceding claims 1 to 4, **characterized in that**
the bands (10, 11) lie loosely on the inside surface (7').

6. Electric cable according to one of the preceding claims 1 to 5, **characterized in that**
the bands (10, 11, 20, 21, 41, 51) have a band thickness of only a few tenths of a millimeter.

7. Electric cable according to one of the preceding claims 1 to 6, **characterized in that**
the bands (10, 11, 20. 21, 41, 51) are made of textile material with water-swelling powder contained therein.

8. Electric cable according to one of the preceding claims 1 to 6, **characterized in that**
the bands consist of threads worked like meshes, which are applied or wound onto the inner surface (7').

9. Method for producing an electric cable according to one of the preceding claims 1 to 8, **characterized in that**
in one process step initially the longitudinal elements, such as bands (10, 11, 20, 41, 51) or threads, of water-swellable material, are applied to the underlying surface and then the outer sheath (8, 48) of plastic material is extruded over it.

10. Method for producing an electrical cable according to one of the preceding claims 1 to 9, **characterized in that**
the longitudinal elements, such as bands (10, 11, 20, 51) or threads, of water-swellable material are unwound from coils during the production of the cable, from which at least one of them are guided around the cable at a rotational speed adapted to the advance of the cable.

11. Method for producing an electrical cable according to one of the preceding claims 1 to 9, **characterized in that**
in one process step initially a metallic shield (7) with a metal band overlapping along the cable and glued at the point of overlap is applied, afterwards the water-swellable bands (10, 11, 20, 51) are applied to the metal band and then the outer sheat (8, 48) of plastic material is extruded over it.

## Revendications

1. Câble électrique ayant une gaine (8, 48) extérieure en matière isolante et, à l'intérieur de celle-ci, une barrière (9, 19) à la pénétration de l'eau en une matière en forme de bande gonflable à l'eau, la barrière (9, 19) étant constituée d'au moins deux éléments oblongs, comme des bandes (10, 11, 20, 41, 51) ou fils en matière gonflable à l'eau, qui passent dans le câble (1, 30) de manière à délimiter dans celui-ci des régions (13, 23) partielles fermées le long du câble, **caractérisé en ce que**
la barrière (9, 19) constituée des au moins deux éléments oblongs passent autour d'un blindage (7, 57) métallique, ce dernier étant constitué d'une bande métallique ou d'une feuille en aluminium ou en cuivre ou autres alliages métalliques conducteurs ou en un enroulement de torons (58) métalliques avec une bande (52) sur toute la surface du côté intérieur en matière gonflable à l'eau.

2. Câble électrique suivant la revendication 1, **caractérisé en ce que** les bandes (10, 11, 20, 51) en matière gonflable à l'eau sont enroulées à recouvrement le long du câble, à des distances (12) déterminées, en forme d'hélice autour d'une surface (16') intérieure.

3. Câble électrique suivant la revendication 1, **caractérisé en ce qu'**au moins une bande (20) en matière gonflable à l'eau est enroulée en hélice autour de la surface (7') intérieure, tandis qu'au moins une autre bande (21) est mise parallèlement à l'axe du câble, de manière à ce que les bandes se recouvrent à des distances déterminées le long du câble (30).

4. Câble électrique suivant l'une des revendications 2 ou 3, **caractérisé en ce que** les points (14, 22) de recouvrement des bandes (10, 11, 20, 21) sont à une distance les uns des autres de plusieurs fois leur largeur (15) de bande.

5. Câble électrique suivant l'une des revendications 1 à 4 précédentes, **caractérisé en ce que** les bandes (10, 11) s'appliquent de manière lâche à la surface (7') intérieure.

6. Câble électrique suivant l'une des revendications 1 à 5 précédentes, **caractérisé en ce que** les bandes (10, 11, 20, 21, 41, 51) ont une épaisseur de bande de seulement quelques dixièmes de millimètres.

7. Câble électrique suivant l'une des revendications 1 à 6 précédentes, **caractérisé en ce que** les bandes (10, 11, 20, 21, 41, 51) sont en une matière textile avec de la poudre gonflant à l'eau qui y est contenue.

8. Câble électrique suivant l'une des revendications 1 à 6 précédentes, **caractérisé en ce que** les bandes sont constituées de fils traités à la manière d'un filet, qui sont déposés ou enroulés sur la surface (7') intérieure.

9. Procédé de fabrication d'un câble électrique suivant l'une des revendications 1 à 8 précédentes, **caractérisé en ce que** dans une opération, on dépose d'abord les éléments oblongs comme des bandes (10, 11, 20, 41, 51) ou des fils en matière gonflable à l'eau sur la surface sous-jacente et on y extrude ensuite la gaine (8, 48) extérieure en matière plastique.

10. Procédé de fabrication d'un câble électrique suivant l'une des revendications 1 à 9 précédentes, **caractérisé en ce qu'**on déroule les éléments oblongs, comme des bandes (10, 11, 20, 51) ou des fils en matière gonflable à l'eau, pendant la fabrication du câble de bobines dont l'une au moins passe autour du câble à une vitesse de rotation adaptée à l'avance du câble.

11. Procédé de fabrication d'un câble électrique suivant l'une des revendications 1 à 9 précédentes, **caractérisé en ce que** dans une opération, on dépose d'abord un blindage (7) métallique, ayant une bande métallique à chevauchement le long du câble et collée en les points de chevauchement, puis on dépose les bandes (10, 11, 20, 51) gonflables à l'eau sur la bande métallique et ensuite on y extrude la gaine (8, 48) extérieure en matière plastique.
